# EUROPEAN PATENT SPECIFICATION

(11) **EP 3 336 935 B1**
(45) Date of publication and mention of the grant of the patent: **24.07.2019**
(21) Application number: 17208062.4
(22) Date of filing: 18.12.2017
(51) Int. Cl.: H01M 2/34, H01H 89/00, H01M 10/637

(54) **BATTERY SAFETY APPARATUS**
BATTERIESICHERHEITSVORRICHTUNG
APPAREIL DE SÉCURITÉ DE BATTERIE

(30) Priority: 19.12.2016 KR 20160173392
(43) Date of publication of application: 20.06.2018
(73) Proprietor: SK Innovation Co., Ltd., Seoul 03188 (KR)
(72) Inventor: CHOI, Geun Young, Daejeon 34124 (KR); KIM, Min Seong, Daejeon 34124 (KR)
(74) Representative: Stolmár & Partner Patentanwälte PartG mbB

(56) References cited:
- DE-A1-102012 215 620
- JP-A- H01 204 360
- JP-A- 2016 004 672

## Description

### CROSS-REFERENCE TO RELATED APPLICATION

This application claims the benefit of priority to Korean Patent Application No. 10-2016-0173392, filed on December 19, 2016 with the Korean Intellectual Property Office.

### BACKGROUND

The present disclosure relates to a battery safety apparatus.

Recently, due to importance of consideration of the environment with respect to transportation, plug-in hybrid electric vehicles (PHEVs), electric vehicles (EVs), and the like have had high public visibility. For PHEVs and EVs, the technological development of batteries is considered to be important. This is because the capacitance and output of such batteries should be significantly higher than other eco-friendly vehicles. However, an excessive increase in the capacitance and output of a battery may adversely affect safety of a battery.

In addition, the technological development of batteries is also considered to be important for a small electronic device such as a portable terminal. In batteries used in such small electronic devices, battery safety is considered to be important, along with capacitance and output of a battery. However, the capacitance and output of a battery are trade-offs with the safety of a battery, so it is difficult to improve the safety of a battery in a situation in which usable space is limited.

A battery safety apparatus according to the preamble of claim 1 is for instance known from document JP H01 204360 A.

### SUMMARY

An aspect of the present disclosure provides a battery safety apparatus capable of improving safety of a battery.

This is done by a battery safety apparatus according to claim 1.

### BRIEF DESCRIPTION OF DRAWINGS

The above and other aspects, features, and advantages of the present disclosure will be more clearly understood from the following detailed description taken in conjunction with the accompanying drawings, in which:
FIG. 1 is a view illustrating a battery safety apparatus ;
FIG. 2 is a view illustrating a connection relationship between a first switch and a second switch;
FIG. 3 is a view illustrating a third switch;
FIG. 4 is a view illustrating a fourth switch;
FIG. 5 and
FIG. 6 is a view specifically illustrating a battery safety apparatus according to an exemplary embodiment.

### DETAILED DESCRIPTION

Hereinafter, embodiments of the present disclosure will be described as follows with reference to the attached drawings.

The present disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

Throughout the specification, it will be understood that when an element, such as a layer, region or wafer (substrate), is referred to as being 'on,' 'connected to,' or 'coupled to' another element, it can be directly 'on,' 'connected to,' or 'coupled to' the other element or other elements intervening therebetween may be present. In contrast, when an element is referred to as being 'directly on,' 'directly connected to,' or 'directly coupled to' another element, there may be no other elements or layers intervening therebetween. Like numerals refer to like elements throughout. As used herein, the term 'and/or' includes any and all combinations of one or more of the associated listed items.

It will be apparent that although the terms first, second, third, etc. may be used herein to describe various members, components, regions, layers and/or sections, any such members, components, regions, layers and/or sections should not be limited by these terms. These terms are only used to distinguish one member, component, region, layer or section from another region, layer or section. Thus, a first member, component, region, layer or section discussed below could be termed a second member, component, region, layer or section without departing from the teachings of the exemplary embodiments.

Spatially relative terms, such as 'above,' 'upper,' 'below,' and 'lower' and the like, may be used herein for ease of description to describe one element's relationship relative to another element(s) as shown in the figures. It will be understood that spatially relative terms are intended to encompass different orientations of the device in use or operation, in addition to the orientation depicted in the figures. For example, if the device in the figures is turned over, elements described as 'above,' or 'upper' relative to other elements would then be oriented 'below,' or 'lower' relative to the other elements or features. Thus, the term 'above' can encompass both the above and below orientations depending on a particular direction of the figures. The device may be otherwise oriented (rotated 90 degrees or at other orientations) and the spatially relative descriptors used herein may be interpreted accordingly.

The terminology used herein describes particular embodiments only, and the present disclosure is not limited thereby. As used herein, the singular forms 'a,' 'an,' and 'the' are intended to include the plural forms as well, unless the context clearly indicates otherwise. It will be further understood that the terms 'comprises,' and/or 'comprising' when used in this specification, specify the presence of stated features, integers, steps, operations, members, elements, and/or groups thereof, but do not preclude the presence or addition of one or more other features, integers, steps, operations, members, elements, and/or groups thereof.

Hereinafter, embodiments of the present disclosure will be described with reference to schematic views illustrating embodiments of the present disclosure. In the drawings, for example, due to manufacturing techniques and/or tolerances, modifications of the shape shown may be estimated. Thus, embodiments of the present disclosure should not be construed as being limited to the particular shapes of regions shown herein, for example, to include a change in shape results in manufacturing. The following embodiments may also be constituted alone, in combination or in partial combination.

The contents of the present disclosure described below may have a variety of configurations and propose only a required configuration herein, but are not limited thereto.

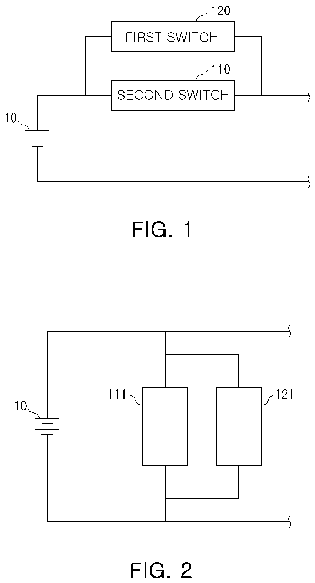

FIG. 1 is a view illustrating a battery safety apparatus not part of the present invention.

Referring to FIG. 1, a battery safety apparatus not part of the present invention may include a first switch 110 and a second switch 120, and may improve safety of a battery 10.

For example, the battery 10 may have a structure in which a plurality of battery cells are connected in series or parallel, and may be a hybrid battery such as a nickel-metal battery, a lithium-ion battery, or the like, but it is not limited thereto. Moreover, the battery 10 may be used for an electric vehicle or a hybrid vehicle.

The battery 10 may be damaged when an ambient temperature is high. In addition, the battery 10 may generate excessive heat during a charging and discharging process when the battery is in a bad condition. In other words, safety of the battery 10 may be further deteriorated as a temperature around the battery 10 is increased.

One end of the first switch 110 is electrically connected to the battery 10, and an open-closed state thereof may be determined depending on temperature. If a temperature around the battery 10 rises, the first switch 110 may be open. Thus, an operation of the battery 10 may be stopped, and safety of the battery 10 may be improved.

The second switch 120 may be connected to the first switch 110 in parallel and an open-closed state may be determined depending on temperature. Thus, an operation of the battery 10 may be stopped when the first switch 110 and the second switch 120 are open.

In one of the first switch 110 and the second switch 120, a momentary malfunction may occur due to local heat concentration, welding, or the like. The momentary malfunction may stop an unnecessary operation of the battery 10. However, when the first switch 110 and the second switch 120 are connected in parallel, a frequency at which the momentary malfunction stops an unnecessary operation of the battery 10 may be significantly reduced. Thus, safety of the battery 10 may be improved.

The first switch 110 and the second switch 120 may have characteristics in which the first switch and the second switch are in an open state when a temperature of the first switch and the second switch is higher than an open-closed state threshold temperature. In addition, an open-closed state threshold temperature of the first switch 110 may be different from an open-closed state threshold temperature of the second switch 120.

For example, when the open-closed state threshold temperature of the first switch 110 is 70 degrees Celsius and the open-closed state threshold temperature of the second switch 120 is 80 degrees Celsius, the first switch 110 may be open as a temperature of the first switch reaches 70 degrees Celsius and the second switch 120 may be maintained in a closed state.

In this case, current flowing in the second switch 120 may be increased according to opening of the first switch 110, so a heating value of the second switch 120 may be increased.

A temperature of the second switch 120 may be increased depending on an increase in a heating value. Hereinafter, the second switch 120 may be open as a temperature of the second switch reaches 80 degrees Celsius. In this case, an operation of the battery 10 may be stopped.

In other words, when an open-closed state threshold temperature of the first switch 110 is different from an open-closed state threshold temperature of the second switch 120, the time margin from when the first switch 110 is open to when the second switch 120 is open may be secured.

If heat causing opening of the first switch 110 is temporary heat due to local heat concentration, welding, or the like, a temperature of the first switch 110 and the second switch 120 may be lowered before the time margin has elapsed. Thus, an operating state of the battery 10 may be maintained.

As described above, the time margin allows a frequency at which an unnecessary operation of the battery 10 is stopped to be further reduced. Thus, safety of the battery 10 may be further improved.

FIG. 2 is a view illustrating a connection relationship between a first switch and a second switch.

Referring to FIG. 2, the first switch 111 and the second switch 121 may be connected to the battery 10 in parallel.

The battery 10 may be normally operated when the first switch 111 and the second switch 121 are open.

Thus, the first switch 111 and the second switch 121 have characteristics in which the first switch and the second switch are in a closed state when a temperature of the first switch and the second switch is higher than an open-closed state threshold temperature, so the battery 10 may be protected.

Meanwhile, the first switch 111 may be formed of bimetal. The bimetal may be in a state in which two metals having different length change characteristics due to a temperature change are bonded to each other. Thus, the bimetal may be bent according to a temperature change. The bimetal may be electrically connected to the battery 10 or may be electrically isolated from the battery 10, according to a degree of bending of the bimetal.

The second switch 121 may be formed of a fuse. In other words, the second switch 121 may be operated using a different principle from that of the first switch 111. A combination of the first switch 111 and the second switch 121 operated on different principles may allow the time margin from when one of the first switch 111 and the second switch 121 is open to when the other is open to be varied, so safety of the battery 10 may be further improved.

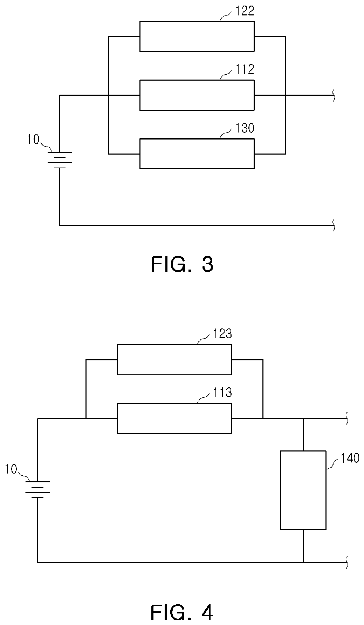

FIG. 3 is a view illustrating a third switch.

Referring to FIG. 3, a battery safety apparatus not part of the present invention may further include a third switch 130 connected to a first switch 112 and a second switch 122 in parallel and in which an open-closed state is determined depending on temperature.

The open-closed state threshold temperature of the third switch 130 is different from an open-closed state threshold temperature of the first switch 112 and may be different from an open-closed state threshold temperature of the second switch 122.

For example, when the open-closed state threshold temperature of the first switch 112 is 70 degrees Celsius, the open-closed state threshold temperature of the second switch 122 is 80 degrees Celsius, and the open-closed state threshold temperature of the third switch 130 is 65 degrees Celsius, the third switch 130 may be open as a temperature of the third switch reaches 65 degrees Celsius, and a temperature of the first switch 112 and the second switch 122 may be increased. Hereinafter, the first switch 112 may be open as a temperature of the first switch reaches 70 degrees Celsius, and a temperature of the second switch 122 may be further increased. Hereinafter, the second switch 122 may be open as a temperature of the second switch reaches 80 degrees Celsius, and may allow an operation of the battery 10 to be stopped.

In other words, as the third switch 130 is connected to the first switch 112 and the second switch 122 in parallel, time margin from when a single switch is open to when all switches are open may be increased. In addition, a difference between a maximum open-closed state threshold temperature and a minimum open-closed state threshold temperature of the first switch 112, the second switch 122, and the third switch 130 may be increased. Thus, safety of the battery 10 may be further improved.

FIG. 4 is a view illustrating a fourth switch.

Referring to FIG. 4, a battery safety apparatus not part of the present invention may further include a fourth switch 140 of which one end is electrically connected to a first switch 113 and the other end is electrically connected to the battery 10.

An open-closed state threshold temperature of the fourth switch 140 is different from an open-closed state threshold temperature of the first switch 113 and may be different from an open-closed state threshold temperature of a second switch 123.

For example, the open-closed state threshold temperature of the first switch 113 is 70 degrees Celsius, the open-closed state threshold temperature of the second switch 123 is 80 degrees Celsius, and the open-closed state threshold temperature of the fourth switch 140 is 80 degrees Celsius, the first switch 113 may be open as a temperature of the first switch reaches 70 degrees Celsius, and a temperature of the second switch 123 and the fourth switch 140 may be increased. Hereinafter, the second switch 123 may be open as a temperature of the second switch reaches 80 degrees Celsius, and the fourth switch 140 may be closed as a temperature of the fourth switch reaches 80 degrees Celsius. When an open-closed state of at least one of the second switch 123 and the fourth switch 140 is changed, an operation of the battery 10 may be stopped.

Here, the first switch 113 may serve to prevent momentary malfunctioning of the second switch 123 and to prevent momentary malfunctioning of the fourth switch 140.

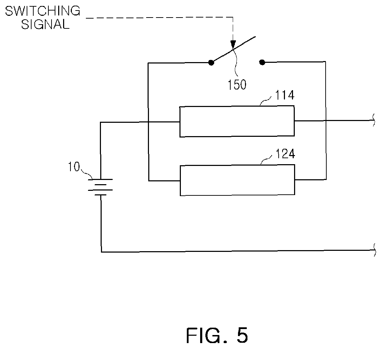

FIG. 5 is a view illustrating a relay.

Referring to FIG. 5, a battery safety apparatus according to an exemplary embodiment of the present invention may further include a relay 150 connected to a first switch 114 and a second switch 124 in parallel, receiving a switching signal, and in which an open-closed state is determined depending on the switching signal.

Here, the switching signal may be received from a configuration other than a switch or may be received from an external source.

Current flowing in the first switch 114 and the second switch 124 may be different according to an open-closed state of the relay 150. If the relay 150 is open, current flowing in the first switch 114 and the second switch 124 may be increased.

Here, a magnitude of the current changed according to opening of the relay 150 may be determined according to a relative resistance value magnitude compared to the first switch 114 and the second switch 124 of the relay 150. If a resistance value of the relay 150 is lower than a resistance value of the first switch 114 and the second switch 124, a change in an open-closed state of the relay 150 may have a significant effect on current of the first switch 114 and the second switch 124, and may have a significant effect on a temperature of the first switch 114 and the second switch 124.

Thus, the relay 150 allows a temperature of the first switch 114 and the second switch 124 to be increased through opening of the relay, so the first switch 114 and the second switch 124 may be open. Here, the first switch 114 and the second switch 124 may be open after the relay 150 is open and time margin has elapsed. In other words, the first switch 114 and the second switch 124 may be open after a switching signal is received and time margin has elapsed.

Thus, a battery safety apparatus according to an exemplary embodiment may delay opening of the first switch 114 and the second switch 124 by time margin, may provide an environment in which the battery 10 is limitedly operated for a specific period, or is limitedly operated within a specific temperature range, and may provide an efficient use environment of the battery 10 while improving safety of the battery 10.

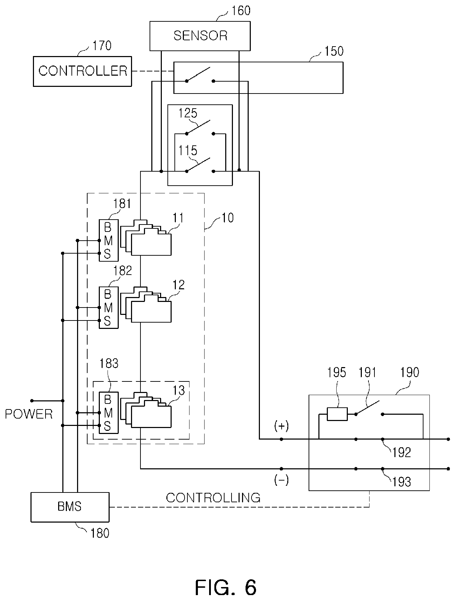

FIG. 6 is a view specifically illustrating a battery safety apparatus according to an exemplary embodiment.

Referring to FIG. 6, a battery safety apparatus according to an exemplary embodiment may include a first switch 115, a second switch 125, a relay 150, a sensor 160, a controller 170, a battery management system (BMS) 180, and a power relay assembly 190.

The first switch 115 and the second switch 125 may be implemented in substantially the same manner as the first switch and the second switch illustrated in FIGS. 1 through 5. The first switch 115 and the second switch 125 may be opened or closed without using energy of the battery 10, the battery management system 180, or the power relay assembly 190. Thus, the first switch 115 and the second switch 125 may be isolated from the battery 10, the battery management system 180, and the power relay assembly 190, and may not be affected by an effect of malfunctioning of the battery 10, the battery management system 180, and the power relay assembly 190. Thus, a battery safety apparatus according to an exemplary embodiment may improve a performance of dealing an emergency situation of the battery 10.

The sensor 160 may sense at least one of current, voltage, and a resistance value of the first switch 115 or the second switch 125. When an open-closed state of at least one of the relay 150, as well as the first switch 115 and the second switch 125 is changed, at least one of current, voltage, and a resistance value of the first switch 115 or the second switch 125 may be changed. Thus, the sensor 160 senses at least one of current, voltage, and a resistance value of the first switch 115 or the second switch 125, an open-closed state of at least one of the relay 150, as well as the first switch 115 and the second switch 125 is changed. Meanwhile, the sensor 160 may be provided as a sampling circuit repeatedly sampling a voltage for each predetermined period.

The controller 170 may generate a switching signal transmitted to the relay 150. For example, the controller 170 may receive information on a battery state from the battery management system 180, and may generate a switching signal corresponding to the information on a battery state.

In addition, the controller 170 may receive sensing information from the sensor 160, and may generate a the switching signal when a current sensed by the sensor 160 is out of a reference current range, a voltage sensed by the sensor 160 is out of a reference voltage range, or a resistance value sensed by the sensor 160 is out of a reference resistance value range. Thus, the controller 170 may adjust a length of time margin from when a single switch is open to when all switches are open.

The BMS 180 may control at least one of a state of charge of the battery 10, voltage, current, and a temperature depending on one operating mode of a normal mode or an emergency mode. For example, the battery management system 180 may control a peripheral module of the battery 10 to allow a state of charge of the battery 10 to be a state of safe charge, to allow voltage of the battery 10 to be safe charge, to allow current of the battery 10 to be safe voltage, or to allow a temperature of the battery 10 to be a safe temperature, when the battery management system is operated in the emergency mode.

In addition, the battery management system 180 may receive sensing information from the sensor 160, and may be operated in the emergency mode when a current sensed by the sensor 160 is out of a reference current range, a voltage sensed by the sensor 160 is out of a reference voltage range, or a resistance value sensed by the sensor 160 is out of a reference resistance value range. Thus, safety of the battery 10 may be further improved.

Meanwhile, the battery management system 180 may include a first battery management system 181, a second battery management system 182, and a third battery management system 183 controlling at least one of a state of charge of a first battery 11, a second battery 12, and a third battery 13, voltage, current, and a temperature.

The power relay assembly 190 may perform a battery balancing operation when voltage imbalance among the first battery 11, the second battery 12, and the third battery 13 occurs. The power relay assembly 190 may include a first power relay 191, a second power relay 192, and a third power relay 193, as well as a variable resistor 195.

The variable resistor 195 may be electrically connected to the first switch 115 or the second switch 125, and may have a variable resistance value. A magnitude of current flowing in the first switch 115 or the second switch 125 may be determined according to a resistance value of the variable resistor 195. Thus, the variable resistor 195 may have an effect on safety of the battery 10.

For example, the variable resistor 195 may receive a resistance value change signal from the controller 170, and may have a resistance value corresponding to the resistance value change signal. Here, the controller 170 may receive sensing information from the sensor 160, and may generate the resistance value change signal when a current sensed by the sensor 160 is out of a reference current range, a voltage sensed by the sensor 160 is out of a reference voltage range, or a resistance value sensed by the sensor 160 is out of a reference resistance value range. Thus, safety of the battery 10 may be further improved.

As set forth above, according to an exemplary embodiment,_safety of a battery may be improved.

In addition, a battery safety apparatus according to an exemplary embodiment may reduce an unnecessary operation of a battery according to a momentary change or malfunction of an open-closed state of a switch, thereby improving life service of a battery.

In addition, a battery safety apparatus according to an exemplary embodiment may provide an environment in which a battery is limitedly operated for a specific period, or is limitedly operated in a specific temperature range, thereby providing an efficient use environment of the battery while improving safety of the battery.

In addition, a battery safety apparatus according to an exemplary embodiment may be operated independently from a battery management system (BMS) and a power relay assembly (PRA), thereby improving a performance of dealing an emergency situation of a battery.

In addition, a battery safety apparatus according to an exemplary embodiment may improve allowable current of a switch to be used universally for a battery having various capacities and outputs.

In addition, a battery safety apparatus according to an exemplary embodiment may be mounted out of a battery, so maintenance may be easily conducted.

While exemplary embodiments have been shown and described above, it will be apparent to those skilled in the art that modifications and variations could be made without departing from the scope of the present invention as defined by the appended claims.

## Claims

1. A battery safety apparatus, comprising:
a first switch (114, 115) of which one end is configured to electrically connect to a battery (10) and in which an open-closed state is determined depending on temperature;
a second switch (124, 125) electrically connected to the first switch (114, 115) in parallel and in which an open-closed state is determined depending on temperature;
wherein an open-closed state threshold temperature of the first switch (114, 115) is different from an open-closed state threshold temperature of the second switch (124, 125),
**characterized in that**
a relay (150) electrically connected to the first switch (114, 115) and the second switch (124, 125) in parallel, receiving a switching signal, and in which an open-closed state is determined by the switching signal.

2. The battery safety apparatus of claim 1, further comprising:
a third switch (130) electrically connected to the first switch (114, 115) and the second switch (124, 125) in parallel and in which an open-closed state is determined depending on temperature,
wherein an open-closed state threshold temperature of the third switch (130) is different from the open-closed state threshold temperature of the first switch (114, 115) and is different from the open-closed state threshold temperature of the second switch (124, 125).

3. The battery safety apparatus of claim 1, further comprising:
a fourth switch (140) of which one end is electrically connected to the first switch (114, 115) and the other end is configured to electrically connect to the battery (10),
wherein an open-closed state threshold temperature of the fourth switch (140) is higher than at least one of the open-closed state threshold temperature of the first switch (114, 115) and the open-closed state threshold temperature of the second switch (124, 125).

4. The battery safety apparatus of claim 1, wherein the first switch (114, 115) is formed of bimetal, and the second switch (124, 125) is formed of a fuse.

5. The battery safety apparatus of claim 1, further comprising:
a sensor (160) configured to sense at least one among a current, a voltage, and a resistance value of the first switch (114, 115); and
a controller (170) configured to generate the switching signal when the current is out of a reference current range, the voltage is out of a reference voltage range, or the resistance value is out of a reference resistance value range.

6. The battery safety apparatus of claim 1, further comprising:
a sensor (160) configured to sense at least one among a current,
a voltage, and a resistance of the first switch (114, 115); and a battery management system (180) configured to control at least one among a state of charge of the battery (10), voltage, current, and a temperature, in a normal mode or an emergency mode,
wherein the battery management system (180) is operated in the emergency mode when a current sensed by the sensor (160) is out of a reference current range, a voltage sensed by the sensor (160) is out of a reference voltage range, or a resistance value sensed by the sensor (160) is out of a reference resistance value range.

7. The battery safety apparatus of claim 1, further comprising:
a sensor (160) configured to sense at least one among a current, a voltage, and a resistance of the first switch (114, 115); and
a variable resistor (195) electrically connected to the first switch (114, 115),
wherein a resistance value of the variable resistor (195) is changed when the current is out of a reference current range, the voltage is out of a reference voltage range, or the resistance value is out of a reference resistance value range.

8. The battery safety apparatus of claim 1, wherein the first and second switches (114, 124, 115, 125) are configured to stop an operation of the battery (10), when the first and second switches (114, 124, 115, 125) are in an open state.

9. The battery safety apparatus of claim 1, wherein the first and second switches (114, 124, 115, 125) are formed of bimetal,
wherein length change characteristics of bimetal of the first switch (114, 115) is different from length change characteristics of bimetal of the second switch (124, 125).

## Patentansprüche

1. Batterie-Sicherheitsvorrichtung, umfassend:
einen ersten Schalter (114, 115), dessen eines Ende eingerichtet ist, um eine elektrische Verbindung mit einer Batterie (10) herzustellen, und bei dem in Abhängigkeit von der Temperatur ein Auf-Zu-Zustand bestimmt wird;
einen zweiten Schalter (124, 125), der elektrisch parallel mit dem ersten Schalter (114, 115) verbunden ist und bei dem in Abhängigkeit von der Temperatur ein Auf-Zu-Zustand bestimmt wird;
wobei sich eine Schwellentemperatur für den Auf-Zu-Zustand des ersten Schalters (114, 115) von einer Schwellentemperatur für den Auf-Zu-Zustand des zweiten Schalters (124, 125) unterscheidet,
**dadurch gekennzeichnet, dass**
ein Relais (150), das elektrisch parallel mit dem ersten Schalter (114, 115) und dem zweiten Schalter (124, 125) verbunden ist, ein Schaltsignal empfängt und bei dem durch das Schaltsignal ein Auf-Zu-Zustand bestimmt wird.

2. Batterie-Sicherheitsvorrichtung nach Anspruch 1, des Weiteren umfassend:
einen dritten Schalter (130), der elektrisch parallel mit dem ersten Schalter (114, 115) und dem zweiten Schalter (124, 125) verbunden ist und bei dem in Abhängigkeit von der Temperatur ein Auf-Zu-Zustand bestimmt wird,
wobei sich eine Schwellentemperatur für den Auf-Zu-Zustand des dritten Schalters (130) von der Schwellentemperatur für den Auf-Zu-Zustand des ersten Schalters (114, 115) und von der Schwellentemperatur für den Auf-Zu-Zustand des zweiten Schalters (124, 125) unterscheidet.

3. Batterie-Sicherheitsvorrichtung nach Anspruch 1, des Weiteren umfassend:
einen vierten Schalter (140), dessen eines Ende elektrisch mit dem ersten Schalter (114, 115) verbunden ist und dessen anderes Ende eingerichtet ist, um eine elektrische Verbindung mit der Batterie (10) herzustellen,
wobei eine Schwellentemperatur für den Auf-Zu-Zustand des vierten Schalters (140) höher ist als mindestens eine aus der Schwellentemperatur für den Auf-Zu-Zustand des ersten Schalters (114, 115) und der Schwellentemperatur für den Auf-Zu-Zustand des zweiten Schalters (124, 125).

4. Batterie-Sicherheitsvorrichtung nach Anspruch 1, wobei der erste Schalter (114, 115) aus Bimetall und der zweite Schalter (124, 125) aus einer Sicherung gebildet ist.

5. Batterie-Sicherheitsvorrichtung nach Anspruch 1, des Weiteren umfassend:
einen Sensor (160), der eingerichtet ist, um mindestens eines aus einem Strom, einer Spannung und einem Widerstandswert des ersten Schalters (114, 115) zu erfassen; und
eine Steuerung (170), die eingerichtet ist, um das Schaltsignal zu erzeugen, wenn der Strom außerhalb eines Referenzstrombereichs liegt, die Spannung außerhalb eines Referenzspannungsbereichs liegt oder der Widerstandswert außerhalb eines Referenzwiderstandswertbereichs liegt.

6. Batterie-Sicherheitsvorrichtung nach Anspruch 1, des Weiteren umfassend:
einen Sensor (160), der eingerichtet ist, um mindestens eines aus einem Strom, einer Spannung und einem Widerstand des ersten Schalters (114, 115) zu erfassen; und
ein Batteriemanagementsystem (180), das eingerichtet ist, um mindestens eines aus einem Ladezustand der Batterie (10), einer Spannung, einem Strom und einer Temperatur in einem Normalmodus oder einem Notfallmodus zu steuern,
wobei das Batteriemanagementsystem (180) in dem Notfallmodus betrieben wird, wenn ein von dem Sensor (160) erfasster Strom außerhalb eines Referenzstrombereichs liegt, eine von dem Sensor (160) erfasste Spannung außerhalb eines Referenzspannungsbereichs liegt oder ein von dem Sensor (160) erfasster Widerstandswert außerhalb eines Referenzwiderstandswertbereichs liegt.

7. Batterie-Sicherheitsvorrichtung nach Anspruch 1, des Weiteren umfassend:
einen Sensor (160), der eingerichtet ist, um mindestens eines aus einem Strom, einer Spannung und einem Widerstand des ersten Schalters (114, 115) zu erfassen; und
einen variablen Widerstand (195), der elektrisch mit dem ersten Schalter (114, 115) verbunden ist,
wobei ein Widerstandswert des variablen Widerstands (195) geändert wird, wenn der Strom außerhalb eines Referenzstrombereichs liegt, die Spannung außerhalb eines Referenzspannungsbereichs liegt oder der Widerstandswert außerhalb eines Referenzwiderstandswertbereichs liegt.

8. Batterie-Sicherheitsvorrichtung nach Anspruch 1, wobei der erste und zweite Schalter (114, 115, 124, 125) eingerichtet sind, um einen Betrieb der Batterie (10) zu stoppen, wenn sich der erste und zweite Schalter (114, 115, 124, 125) in einem geöffneten Zustand befinden.

9. Batterie-Sicherheitsvorrichtung nach Anspruch 1, wobei der erste und zweite Schalter (114, 115, 124, 125) aus Bimetall gebildet sind,
wobei sich die Längenänderungseigenschaften des Bimetalls des ersten Schalters (114, 115) von den Längenänderungseigenschaften des Bimetalls des zweiten Schalters (124, 125) unterscheiden.

## Revendications

1. Appareil de sécurité de batterie, comprenant:
un premier commutateur (114, 115) dont une extrémité est configurée pour se connecter électriquement à une batterie (10) et dans lequel un état d'ouverture et de fermeture est déterminé en fonction de la température;
un deuxième commutateur (124, 125) connecté électriquement au premier commutateur (114, 115) en parallèle et dans lequel un état d'ouverture et de fermeture est déterminé en fonction de la température; et
dans lequel une température de seuil d'état ouvert-fermé du premier commutateur (114, 115) est différente d'une température de seuil d'état ouvert-fermé du deuxième commutateur (124, 125)
**caractérisé en ce que**
un relais (150) connecté électriquement au premier commutateur (114, 115) et au deuxième commutateur (124, 125) en parallèle, recevant un signal de commutation, et dans lequel un état ouvert/fermé est déterminé par le signal de commutation.

2. Appareil de sécurité de batterie selon la revendication 1, comprenant en outre:
un troisième commutateur (130) connecté électriquement au premier commutateur (114, 115) et au deuxième commutateur (124, 125) en parallèle et dans lequel un état d'ouverture et de fermeture est déterminé en fonction de la température,
dans lequel une température de seuil d'état ouvert-fermé du troisième commutateur (130) est différente de la température de seuil d'état ouvert-fermé du premier commutateur (114, 115) et est différente de la température de seuil d'état ouvert-fermé du deuxième commutateur (124, 125).

3. Appareil de sécurité de batterie selon la revendication 1, comprenant en outre:
un quatrième commutateur (140) dont une extrémité est connectée électriquement au premier commutateur (114, 115) et l'autre extrémité est configurée pour être connectée électriquement à la batterie (10),
dans lequel une température de seuil d'état ouvert-fermé du quatrième commutateur (140) est supérieure à au moins l'une de la température de seuil d'état ouvert-fermé du premier commutateur (114, 115) et de la température de seuil d'état ouvert-fermé du deuxième commutateur (124, 125).

4. Appareil de sécurité de batterie selon la revendication 1, dans lequel le premier commutateur (114, 115) est formé d'un bimétal, et le deuxième commutateur (124, 125) est formé d'un fusible.

5. Appareil de sécurité de batterie selon la revendication 1, comprenant en outre:
un capteur (160) configuré pour détecter au moins un parmi un courant, une tension et une valeur de résistance du premier commutateur (114, 115); et
un contrôleur (170) configuré pour générer le signal de commutation lorsque le courant est hors d'une plage de courant de référence, la tension est hors d'une plage de tension de référence ou la valeur de résistance est hors d'une plage de résistance de référence.

6. Appareil de sécurité de batterie selon la revendication 1, comprenant en outre:
un capteur (160) configuré pour détecter au moins un parmi un courant, une tension et une valeur de résistance du premier commutateur (114, 115); et
un système de gestion de batterie (180) configuré pour commander au moins un parmi un état de charge de la batterie (10), une tension, un courant et une température, dans un mode normal ou un mode d'urgence,
dans lequel le système de gestion de batterie fonctionne en mode d'urgence lorsqu'un courant détecté par le capteur (160) est hors d'une plage de courant de référence, une tension détectée par le capteur (160) est hors d'une plage de tension de référence ou une valeur de résistance détectée par le capteur (160) est hors d'une plage de résistance de référence.

7. Appareil de sécurité de batterie selon la revendication 1, comprenant en outre:
un capteur (160) configuré pour détecter au moins un parmi un courant, une tension et une valeur de résistance du premier commutateur (114, 115); et
une résistance variable (195) connecté électriquement au premier commutateur (114, 115),
dans lequel une valeur de résistance de la résistance variable (195) est modifiée lorsque le courant est hors d'une plage de courant de référence, la tension est hors d'une plage de tension de référence ou la valeur de résistance est hors d'une plage de résistance de référence.

8. Appareil de sécurité de batterie selon la revendication 1, dans lequel les premier et deuxième commutateurs (114, 124, 115, 125) sont configurés pour arrêter un fonctionnement de la batterie, lorsque les premier et deuxième commutateurs (114, 124, 115, 125) sont dans un état ouvert.

9. Appareil de sécurité de batterie selon la revendication 1, dans lequel les premier et deuxième commutateurs (114, 124, 115, 125) sont formés de bimétal,
dans lequel caractéristiques de changement de longueur du bimétal du premier commutateur (114, 115) sont différentes des caractéristiques de changement de longueur du bimétal du deuxième commutateur (124, 125).
